# EUROPÄISCHE PATENTANMELDUNG

(11) **EP 4 390 883 A1**
(43) Veröffentlichungstag der Anmeldung: **26.06.2024**
(21) Anmeldenummer: 22216674.6
(22) Anmeldetag: 24.12.2022
(51) Int. Cl.: G07G 1/00, G06Q 20/20, B62B 5/00

(54) **KONTROLLVERFAHREN BEI DIGITALEN EINKAUFSWAGEN**

(71) Anmelder: KBST GmbH, 34121 Kassel (DE)
(72) Erfinder: Becker, Niels, 34260 Kaufungen (DE); Kraus, Jan, 34260 Kaufungen (DE)
(74) Vertreter: Reinhardt, Thomas Johannes

(57) **Zusammenfassung**

Die Erfindung betrifft ein Verfahren und Vorrichtungen zum digitalen Erfassen und Nachverfolgen von Waren, die beim Einkauf in den Warenkorb eines digitalen Einkaufswagens eingelegt werden. Um den Benutzerkomfort bei der Benutzung eines digitalen Einkaufswagens zu erhöhen, werden folgende Schritte vorgeschlagen:
wenn ein Kontrollvorgang ergibt, dass eine Ware nicht oder nicht verlässlich genug erfasst worden ist, separates Abspeichern einer Kopie von aufgenommenen Bilddaten aus einem Zeitabschnitt vorgegebener Länge, die den Einlegevorgang der Waren in den Warenkorb zeigen,
Erstellen einer Markierung für die nicht oder nicht verlässlich genug erfasste Ware (210) in einer digitalen Warenliste, die die in den Warenkorb eingelegten Waren repräsentiert, Automatisiertes Prüfen der Warenliste auf das Vorhandensein von in der Warenliste markierten Waren,
bei Antreffen einer markierten Ware (210), Abspielen der separat abgespeicherten Kopie der Bilddaten aus einem Zeitabschnitt vorgegebener Länge, die den Einlegevorgang der Ware in den Warenkorb zeigen,
Anbieten einer Benutzerschnittstelle in der Kassenzone zum separaten Nacherfassen der markierten Ware.

## Beschreibung

Die vorliegende Erfindung liegt auf dem Gebiet der digitalen Einkaufswagen, die mit einer Warenplatte als Plattenwagen oder klassisch mit einem Korb und einer darunterliegenden Warenauflage für größervolumige Waren ausgerüstet sind, und auf dem Gebiet der Kommissionierwagen. Diese Wagen werden im Folgenden vereinfachend als "Einkaufswagen" bezeichnet. Die Erfindung betrifft ein Kontrollverfahren zur Feststellung, ob alle Waren im Einkaufswagen korrekt erfasst worden sind, nach dem Oberbegriff von Anspruch 1, sowie entsprechende Vorrichtungen, die zur Implementierung dieses Verfahrens geeignet sind.

### STAND DER TECHNIK

Die Abgrenzung der vorliegenden Erfindung zum Stand der Technik geschieht anhand von klassischen, digitalen "Einkaufswagen" im Einzelhandel, die mit einem digitalen Warenerfassungssystem ausgerüstet sind. Diese werden hier als "digitale Einkaufswagen" bezeichnet.

Gattungsgemäße digitale Einkaufswagen im engeren Sinne, wie sie in Einzelhandelsladengeschäften verwendet werden, sind mit einer modernen elektronischen Benutzerschnittstelle, oft einer Art vereinfacht ausgestattetem Tabletcomputer mit Display, versehen, mit dem ein Kunde eine Ware zum Beispiel durch einen Scanvorgang mit einem daran angeschlossenen Handscanner erfassen kann, bevor er sie in seinen Einkaufswagen legt.

Dabei sind die digitalen Einkaufswagen mit diversen Sensoren ausgestattet, um die Waren, die beim Einkauf in den rollenden Einkaufswagen eingelegt werden, möglichst genau und redundant zu erfassen, um die Sicherheit gegen einfaches Vergessen der Erfassung von Waren und gegen Mißbrauch und Diebstahl von Waren zu erhöhen. Hierzu gehören beispielsweise eine oder mehrere Kameras, von denen eine am Einkaufswagen befestigt ist, aber auch Kameras, die im Laden meist an der Decke fest installiert sind, und das "Warenbild" im Einkaufskorb sowie die Bewegung des Einkaaufswagens aufnehmen.

Weitere Sensoren sind Waagen, die das Gewicht der Waren im Korb des Einkaufswagens messen und einer programmgesteuerten Weiterverarbeitung digital verfügbar machen.

Diverse weitere Sensoren wie Radar- und Lidarsensoren, magnetisch empfindliche Sensoren, Bluetooth-Sender, GPS-Tracker, etc. werden im Stand der Technik verwendet, um die Position des Einkaufswagens nachzuverfolgen. All die Daten, die von den Sensoren geliefert werden, werden programmgesteuert automatisiert weiterverabeitet und dienen dazu, dass die Waren korrekt bezahlt werden, und dass kein Einkaufswagen an sich gestohlen wird. Dazu sind die Einkaufswagen in ein WLAN eingebunden, das lokal im Laden aktiv ist. Die erfassten Daten können lokal im Laden oder in der cloud weiterverarbeitet werden.

Die US-Patentanmeldung US 2022/0194454 A1 beschreibt ein solches System.

In nachteilhafter Weise ist jedoch der Benutzerkomfort noch zu gering, sei es für einen Kunden, der die Waren beim Einlegen in den Wagen scannen soll und dabei vielleicht manch einen Fehler macht, oder für die Kassiererin, die kontrollieren soll, ob alle im Warenkorb befindlichen Waren korrekt erfasst sind.

Die Aufgabe der vorliegenden Erfindung besteht daher darin, den Benutzerkomfort bei der Benutzung eines digitalen Einkaufswagens zu erhöhen, um dadurch die Akzeptanz dieses Systems erheblich zu steigern.

### VORTEILE DER ERFINDUNG

Der erfindungsgemäße Gegenstand mit den Merkmalen des Anspruchs 1, sowie der Gegenstand der Nebenansprüche lösen diese Aufgabe.

In den Unteransprüchen finden sich vorteilhafte Weiterbildungen und Verbesserungen des jeweiligen Gegenstandes der Erfindung.

Das erfindungegemäße Verfahren kann in einem Ladengeschäft, in dem Einkaufswagen, sogenannte Cash& Carry (C&C)- Wagen, verwendet werden, sei es ein Lebensmittelmarkt, ein Discounter, ein Baumarkt oder was auch immer, vorteilhaft eingesetzt werden. Es kann ebenfalls beim Kommissionieren von Waren im Großhandel oder von Mitarbeitern in beliebigen Logistikzentren eingesetzt werden, immer dann, wenn es darauf ankommt, aus einem größeren Warensortiment bestimmte Waren in einer bestimmten Anzahl herauszusuchen und separat mittels eines fahrbaren Kommissionierwagens an einen anderen Ort zu bringen. Die Abgrenzung zum Stand der Technik geschieht anhand von klassischen, digitalen "Einkaufswagen" im Einzelhandel, die mit einem digitalen Warenerfassungssystem ausgerüstet sind. Diese werden hier als "digitale Einkaufswagen" bezeichnet. Dieses System enthält eine sogenannte Scanbox, eine Kamera oder / und eine Waage, die das Gewicht einer eingelegten oder einzulegenden Ware messen kann. Unter dem Begriff "Scanbox" wird ein lauffähiger Tabletcomputer oder irgendeine andere, endkundengeeignete, bzw. bei Kommissionierwagen mitarbeiter-geeignete, computergestützte Hardware / Software Kombination als Schnittstelle zum Kunden bzw. zum Mitarbeiter verstanden, mit einem Speicher zum Speichern von Codeabschnitten und eine Logikeinheit zur Ausführung dieser Codeabschnitte zum Ausführen entsprechender Schritte der nachfolgenden erfindungsgemäßen Verfahren und vorzugsweise mit einem robusten Touch-Display, so dass der Benutzer Informationen vom System erkennen und Eingaben an das System leicht erstellen kann.

Gemäß einem ersten Aspekt der vorliegenden Erfindung wird ein Verfahren zum Erfassen und Nachverfolgen von Waren, die beim Einkauf in den Warenkorb eines digitalen Einkaufswagens eingelegt werden, offenbart, das folgende Schritte enthält:
a) permanentes Aufnehmen von Bilddaten des Warenkorbs durch wenigstens eine am Einkaufswagen montierte Kamera, die filmen und vorzugsweise auch höher als die Filmframes aufgelöste Fotos erzeugen kann, also jedenfalls Bilddaten erzeugt, wobei die erzeugten Bilddaten der Kamera während eines Zeitfensters - zum Beispiel 5 Sekunden bis 1 Minute oder länger - rollierend abgespeichert und vorher bestehende Bilddaten überschrieben werden; Das heißt, die Kamera speichert temporär zum Beispiel 30 Sekunden lange Filmsequenzen in einem ersten Speicherbereich und überschreibt diesen Speicherbereich wieder, während sie eine nachfolgende, 30 Sekunden lange Szene aufnimmt. Der temporäre Speicher ist bevorzugt an der erfindungsgemäßen Scanbox am Einkaufswagen. Die Bilddaten können aber auch über WLAN an einen Server im Ladengeschäft oder in eine Cloud übertragen werden.
b) Registrieren eines Einlegevorgangs einer Ware in den Warenkorb mittels automatisierter Auswertung von Sensordaten, die von Sensoren am Einkaufswagen bereitgestellt werden. Das Geschehen im und am Einkaufswagen wird dafür mittels der Sensordaten programmgesteuert von einem Programmmodul der Scanbox analysiert, so dass Ereignisse definiert werden können, die man als "Einlegevorgang einer Ware" bezeichnen kann. Hierzu wird auf Technologie vom Stand der Technik zurückgegriffen, einschließlich des Einsatzes von KI und maschinellem Lernen. Dabei ist als Sensor ein genau messendes Wägesystem vorteilhaft einsetzbar, aber auch alternativ dazu oder in Kombination mit dem Wägesystem der Einsatz von einer oder zwei , drei oder mehr Kameras, die am Wagen montiert ist / sind, und deren Bilddaten dann von der Kl- Logik ausgewertet werden, wie weiter unten näher beschrieben wird. Bei entsprechender Qualität der Bilddaten und deren Auswertelogik kann eine Waage verzichtbar sein.
c) Durchführen eines automatisierten Kontrollvorgangs darauf, ob die eingelegte Ware verlässlich genug erfasst worden ist. Dies kann durch Scannen eines üblichen Strichcodes, durch die Erfassung eines RFID-Codes oder dergleichen kombiniert mit einer automatisierten Erkennung anhand von live aufgenommenen Bildern der Ware, insbesondere unter Zuhilfenahme von KI-Methoden und Abgleich in einer vorhandenen Warendatenbank, bei der für jede Ware ein Bild hinterlegt ist, erfolgen. Es kann darüberhinaus auch alternativ dazu oder in Kombination mit einer genauen Erfassung des tatsächlichen Ist-Gewichts der eingelegten Ware und durch Abgleich mit dem erwarteten Soll-Gewicht der Ware, das aus einer im WLAN oder im lokalen Speicher am Wagen verfügbaren Warendatenbank entnehmbar ist. Führt der Abgleich von Bildern und/ oder der Abgleich der Gewichte zu Unterschieden, die größer sind als ein vorgegebenes, warenspezifisches Toleranzmaß, so wird die frisch eingelegte Ware in einer digital erstellten und laufend während des Einkaufs ergänzten Warenliste als "nicht verlässlich genug erfasst" markiert, siehe auch unten bei Ziffer e).
d) wenn der Kontrollvorgang ergibt, dass eine Ware nicht oder nicht verlässlich genug erfasst worden ist, dann erfolgt ein separates Abspeichern einer Kopie der aufgenommenen Bilddaten, die den registrierten Einlegevorgang zeigen, aus einem Zeitabschnitt vorgegebener Länge - zum Beispiel 3 Sekunden vor und 5 Sekunden, nachdem die Waage oder die Bilderkennung das Einlegen der Ware signalisiert hat. Die Waage kommuniziert also in Echtzeit mit der Logik an der scanbox des Einkaufswagens. Die Kommunikation kann drahtgebunden oder drahtlos zum Beispiel per Bluetooth oder per WLAN-Verbindung erfolgen. Die "Waage" im vorgenannten Zusammenhang ist ein System aus einer oder mehreren, bevorzugt aus drei sogenannten Wägezellen, die zwischen dem Einkaufskorb und dem Rollengestell des Einkaufswagens montiert sind, die jeweils mit einem Messelektronikbauteil und sofern notwendig einem Messdatenverstärker und einer Drahtlosschnittstelle oder mit Kabeln zur Kommunikation mit der Scanboxlogik am Einkaufswagen ausgestattet sind. Dies ist vorbekannnt aus den Patentanmeldungen US 2015/0206121 A1 oder DE 10 2018 132 059 A1. Die Wägezellen sind so montiert, dass sie die Belastung durch Waren an allen Flächen, an denen der Kunde Waren einlegen kann, präzise messen können.
   Die separate abgespeicherte Kopie des im Beispiel 8 Sekunden langen Zeitausschnitts der Bilddaten liegt bevorzugt lokal im Speicher der Scanbox-Logik am Einkaufswagen und wird vorzugsweise redundant zusammen mit der ID des Einkaufswagens per WLAN an einen Kontrollrechner übertragen, der die gesamten Warenerfassungsvorgänge im Ladengeschäft ständig mitprotokolliert.
e) Erstellen einer Markierung für die nicht oder nicht verlässlich genug erfasste Ware in einer digitalen Warenliste, die die in den Warenkorb eingelegten Waren repräsentiert;

Im Regelfall entsteht während des Einkaufs von beispielhaften 20 Waren eine digitale Warenliste, die neben der Einkaufswagen-ID 20 Einträge besitzt, die pro Eintrag jeweils eine Waren-ID, einen warenbeschreibenden Klartext und das gemessene Ist-Gewicht der Ware beinhalten. Optional und bevorzugt kann der Zeitpunkt des Einlegens, der Ort des Einlegens im Ladengeschäft, der über mit der Scanboxlogik kommunizierende Bluetooth-Beacons näher eingegrenzt werden kann, ebenso pro Eintrag in der Warenliste abgespeichert sein. Der Kunde sieht allerdings nur einen Teil dieser Daten, nämlich bevorzugt Name, Menge und Preis der Ware. Hat der Kunde nun beispielhaft zwei der 20 Waren nicht verlässlich genug oder gar nicht erfasst, etwa, weil er vergessen hat, die Ware zu scannen, so werden in dieser Warenliste die entsprechenden Einträge diesbezüglich markiert und für den Kunden sichtbar gemacht.

Die Erfassung der Waren am Einkaufswagen kann mit allen üblichen und zweckdienlichen Methoden erfolgen, also etwa durch einen an der Scanbox angeschlossenen Handscanner, der einen an der Ware angebrachten Code liest, oder durch eine Kamera, die während des Einlegevorgans in den Warenkorb ein Bild oder mehrere Bilder der Ware erstellt, durch RFID-Tags an der Ware und entsprechende RFID-Reader, durch NFC-Tags und NFC-Empfänger, etc.

Spätestens in der Check-out-Zone oder in der Kassenzone - oder auch während des Einkaufs in der Autonomie des Kunden liegend - erfolgen dann die nachstehenden automatisierten Schritte, um die ungenügend erfassten Waren korrekt durch das Kassenpersonal bzw. durch den Kunden nachzuerfassen:
a) automatisiertes Prüfen der für den Einkauf erstellten digitalen Warenliste auf das Vorhandensein von in der Warenliste markierten Waren,
b) bei Antreffen einer markierten Ware, Abspielen der separat abgespeicherten Kopie der Bilddaten aus einem Zeitabschnitt vorgegebener Länge, die den Einlegevorgang der markierten Ware in den Warenkorb zeigen,
c) Anbieten einer Benutzerschnittstelle in der Kassenzone oder an der scanbox des Einkaufswagens zum separaten Nacherfassen der markierten Waren.

Bei Kommisionierungsvorgängen erfolgen diese Schritte in einer entsprechenden Kontrollzone, ggf. unterstützt durch entsprechendes Kontrollpersonal.

Hierdurch wird ein wesentlicher Vorteil gegenüber den im Stand der Technik bekannten Kontrollverfahren erzielt: Denn die Kassiererin muss nicht mehr in den Waren des Einkaufswagens mühsam herumsuchen, welche Ware ungenügend oder gar nicht erfasst wurde. Stattdessen kann sie auf dem abgespielten Kurzvideo genau die mangelhaft erfasste Ware auf ihrem Display sehen, und zwar den kompletten Vorgang, wie diese Ware in den Wagen eingelegt wurde. Sie kann dann diese Ware gezielt greifen und sie korrekt nacherfassen - durch Scannen, manuelle Eingabe der Warenkennung, oder andere geeignete Vorgänge, wie sie aus dem Stand der Technik bekannt sind.

Bietet man dem Kunden während des Einkaufs diese Möglichkeit, so kann er in Ruhe seine Waren in den Wagen einlegen, ohne sich darum kümmern zu müssen, ob nun jede Ware korrekt von im während des Einlegens erfasst wurde oder nicht. Der Kunde wird daher während seines Einkaufs nicht mehr irritiert von eventuellen Fehlermeldungen, die während des Einkaufs am Display der Scanbox erscheinen. Dies erhöht die Akzeptanz für den digital kontrollierten Einkauf beim Kuden erheblich, was gerade bei älteren oder sehschwachen Kunden von großem Nutzen ist. Der Kunde kann dann, zum Beispiel um die Wartezeit in der Kassenschlange auszunutzen, alle als ungenügend erfasst markierten Waren seiner digitalen Einkaufsliste greifen, weil er sie auf dem Kurzvideo sieht, und sie in Ruhe nacherfassen. Die Warenliste wird dann laufend aktualisiert, die Anzahl der ungenügend erfassten Waren nimmt dabei ab.

In einer anderen Variante des Verfahrens sind die Kurzvideos nur für das kontrollierende Personal sichtbar, um die falsch registrierten Waren nachzuerfassen.

Das automatisierte Abarbeiten der als "ungenügend erfasst" markierten Waren kann zweckmäßig wahlweise durch die in der Scanbox implementierte Software oder aber durch ein separat an der Kasse installiertes Kassenprüfmodul erfolgen. Hierbei erfolgt die Zuordnug zum konkreten Einkaufswagen und zum zugehörigen Kunden durch Lesen einer am Wagen angebrachten Einkaufswagen-ID, beispielsweise mittels eines am Einkaufswagen robust angebrachten RFID- Codes oder durch NFC-Kommunikation zwischen der Scanbox am Einkaufswagen und einem tragbaren NFC-Element des Kassenprüfmoduls, oder über WLAN mittels Wagen-ID und Bon-Nummer. Über diese Zuordnung kann das Kassenmodul auf die konkrete digitale Warenliste des Kunden zugreifen.

Ein weiteres vorteilhaftes Merkmal der Erfindung ist eine in dem erfindungsgemäßen Scanboxprogramm implementierte, automatisierte Konfidenzbewertung, wonach eine Ware als nicht verlässlich genug erfasst gilt, anhand von Konfidenzdaten für die jeweilige Warenerfassung erstellt wird. Die Erfassung einer Ware wird dabei nach warenartspezifischen Gesichtspunkten mit einem Wahrscheinlichkeitsmaß belegt, das bei 100% liegt, wenn mit Sicherheit gesagt werden kann, dass die Warenerfassung korrekt ist, und bei einem sehr geringen Prozentsatz, etwa weniger als 20%, wenn die Warenerfassung aus Sicht des Händlers untauglich ist. Details hierzu sind weiter unten offenbart. Eine wichtige Datenquelle dafür sind die Daten, die von der oder den Kameras und von dem Wägesystem geliefert werden. Die genannte automatisierte Konfidenzbewertung kann jedoch noch auf viele weitere Informationen gestützt werden, die über zusätzliche Sensoren erzeugt und vorzugsweise drahtlos an einen Empfänger übertragen werden, der diese Daten dann an die betriebene Software weitergibt: So kann eine automatische Verortung der regulären Regalstandorte im Laden für eine jeweilige Ware als Hinweis dienen, wenn ein Artikel nicht dort erfasst wurde, wo er im Regal steht. Das würde die Konfidenzdaten bei der Erfassung dieser Ware beispielsweise deutlich verringern. Zu Grunde gelegt wird dafür eine Warenplatzierungkarte, die eine Zuodnung jeglicher Ware zu ihrem normalen Standort im Laden herstellt, sei es in Regalen oder mobilen Aufbauten, in Kühltruhen, etc. Dies kann unabhängig vom Ladenzuschnitt, der Sortimentsart und der Sortimentsgröße erfolgen. Der Standort des Einkaufswagens kann hinreichend genau mit Bluetooth -Beacons, mit WLAN oder anderen geeigneten Technologien vom Stand der Technik erfasst werden.

Eine vorteilhafte Weiterbildung des erfindungsgemäßen Verfahrens ergibt sich aus der Tatsache, dass es in einem Laden meist Warengruppen gibt, deren Waren abgewogen werden müssen, wenn sie nicht pro Stück verkauft werden. Der klassische Fall sind die Warengruppen von Obst und Gemüse. Die Etiketten, die die Waren identifizieren und sie zu einer solchen "Wägepflicht-Ware" zuordnen, sollten daher vorzugsweise so gekennzeichnet sein, dass die Wägepflicht von der automatisierten Erfassung wahrgenommen wird. Genauso sollten Etiketten von Waren ohne Wägepflicht so gekennzeichnet sein, dass diese Eigenschaft ebenso von der automatisierten Erfassung wahrgenommen wird. Eine Herabstufung der Konfidenzdaten ergibt sich danach beispielsweise auch für den Fall, dass ein Obstetikett der Wägepflicht-Ware "Obst" gescannt wird, das vor der Erfassung in betrügerischer Absicht oder aus Versehen zum Beispiel auf eine hochpreisige Weinflasche geklebt und eingelegt wird.

Das erfindungsgemäße Auslösen der Kontrolle auf in der Warenliste des Einkaufswagens als "ungenügend erfasste" und so markierte Waren kann durch verschiedene Ereignisse erreicht werden: Beispielsweise durch Erreichen einer "Bezahlzone", was mittels eines Ortungsverfahrens nach dem Stand der Technik definierbar ist, oder durch Passage einer Lichtschranke, durch Betätigen einer dafür vorgesehenen Taste an der von einer Kassiererin besetzten Kasse oder an einer Selbstbedienungskasse, an einer Zahlstation, an dem Scanbox-Tablet, das am Einkaufswagen oder an der Zahlstation fest angebracht ist, oder durch Erfassen eines Übertragungscodes an der Kasse, durch Erfassen eines Bildes des Einkaufswagens beim Eintritt in die Bezahlzone durch eine von mehreren vorhandenen, fest installierten Kameras, durch Passieren eines dezidierten Bluetooth Beacons, etc..

In vorteilhafter Weise kann das erfindungsgemäße Verfahren ausgeführt werden ohne auf Sollgewichte zugreifen zu müssen, die in einer Warendatenbank abgespeichert sind, wenn die erfassten Bilddaten gut genug sind. Dann reicht bei nicht erfolgtem Scanvorgang ein Abgleich zwischen den Bilddaten der Ware, die während des Einlegens der Ware erstellt wurden und einem oder mehreren für die Ware in der Warendatenbank hinterlegten Bild. Wenn eine Wägefunktion am Einkaufswagen vorhanden ist, kann das Ist-Gewicht für diese Ware erfasst, und sowohl in der digitalenen Warenliste als auch in der Warendatenbank abgespeicherft werden. Da die Warendatenbank des Ladengeschäfts in der Cloud vorhanden ist, können die Ist-Gewichte einer Ware von mehreren Einkäufen eines Standorts und aus verschiedenen Standorten einer Warenhauskette in der Datenbank abgespeichert werden. So entsteht im Laufe der Zeit eine empirisch erhobene Datenbasis, die das automatisierte Verfahren der Erfindung laufend verbessert. Daher kann das erfindungsgemäße Verfahren zu einem späteren Zeitpunkt, wenn genügend Ist-Gewichte zu einer Ware gespeichert sind und deren Sollgewicht zum Beispiel als Mittelwert der Ist-Gewichte abgespeichert worden ist, auch ohne Erfassen und Auswerten von Bilddaten angewendet werden.

Von erheblichem Vorteil ist, wenn eine sehr präzise Waage das automatisierte, validierte Anlernen der Bilddaten ermöglicht. Wenn eine Kamera erst einen Scan bekommt und dann das Gewicht durch die Waage verifiziert wird, ist die Sicherheit, dass die eingelegte und gewogene Ware genau die gescannte Ware ist, hoch genug. Dann kann die Kamera Bilder aufzeichnen und die Ware für die Bilderkennung "anlernen". Sind dann nach ausreichender "Anlernzeit" ausreichend Bilddaten angelernt, so kann das bloße Einlegen einer Ware in den Wagen ohne tatsächliche Bilderfassung zur Warenerfassung ausreichen. Über das Gewicht und die angelernten Bilddaten kann der Wagen dann mit hinreichender Sicherheit sagen, dass eine bestimmte Ware eingelegt wurde.
Wägemessung und Scancode wie beschrieben stellen also eine bevorzugte Variante bei der Warenerfassuung gemäß Erfindung dar.

Zusammenfassend erhöht das erfindungsgemäße Verfahren nicht nur den Nutzerkomfort, sondern ist essentiell für den rentablen Einsatz der zugehörigen Technik zur Warenerfassung. Ohne das erfindungsgemäße Verfahren hat diese Technik für viele Kunden einen blockierenden Effekt, da sie beim Erfassen einer Ware auf sich selbst gestellt und überfordert sind, sobald etwas nicht reibungslos klappt. Erst durch das erfindungsgemäße Verfahren werden Nutzerfreundlichkeit und Sicherheit für den Händler zufriedenstellend kombiniert.

In vorteilhafter Weise werden Waren gemäß der vorliegenden Erfindung alternativ oder in Kombination zur Wägemessung und dem Scancode durch Bilderkennungsmethoden vom Stand der Technik identifiziert. Beispielhaft seien folgende Quellen genannt:
Für die Grundlagen:
   Bishop, Christopher M. Neural networks for pattern recognition. Oxford university press, 1995.
Für Bildklassifizierung:
   Krizhevsky, Alex, Ilya Sutskever, and Geoffrey E. Hinton. "Imagenet classification with deep convolutional neural networks." Communications of the ACM 60.6 (2017): 84-90.
   https://dl.acm.org/doi/abs/10.1145/3065386
   zuletzt abgerufen am 22.11.2022.
Oder:
   Rawat, Waseem, and Zenghui Wang. "Deep convolutional neural networks for image classification: A comprehensive review." Neural computation 29.9 (2017): 2352-2449.
   https://ieeexplore.ieee.org/abstract/document/8016501
   zuletzt abgerufen am 22.11.2022.
Für Obkjekterkennung:
   Redmon, Joseph, et al. "You only look once: Unified, real-time object detection." Proceedings of the IEEE conference on computer vision and pattern recognition. 2016.
   https://www.cv-foundation.org/openaccess/content cvpr 2016/html/Redmon You Only Look CVPR 2016 paper.html
   zuletzt abgerufen am 22.11.2022.
Für Produkterkennung im Einzelhandel:
   Wei, Yuchen, et al. "Deep learning for retail product recognition: Challenges and techniques." Computational intelligence and neuroscience 2020 (2020).
   https://www.hindawi.com/journals/cin/2020/8875910/
   zuletzt abgerufen am 22.11.2022.

Mittels "Object Detection" wird der relevante Bildausschnitt erkannt und mittels "Image Classification" wird das einzelne Produkt erkannt.

Neuronale Netze speichern gelernte Informationen in ihrer Struktur und können so Abstraktionen bilden um Bilder zu klassifizieren. Dies ist beispielsweise offenbart in:
https://de.wikipedia.org/wiki/K%C3%BCnstliches neuronales Netz
   und in:
Convolutional Neural Network - Wikipedia für die sogenannten "Convolutional Neural Networks", hier als CNN abgekürzt, die vornehmlich bei der maschinellen Verarbeitung von Bild- oder Audiodaten angewendet werden.

Diese CNNs müssen mit sehr vielen Beispielen trainiert werden. Diese Beispiele können z.B. aus dem Live-Betrieb bei der Benutzung des erfindungsgemäßen Verfahrens im Trainingsmodus generiert werden, in dem bei jedem Scan / Einlegevorgang ein Bild aufgenommen wird. So werden unter realen Licht- und Umgebungsbedingungen Bilder mit eindeutig zugeordnetem Produkt erstellt, wenn es vorher vom Kunden gescannt wurde.

Man "füttert" einem solchen CNN beispielsweise 1000 verschiedene Bilder, bei denen jemand eine Coca Cola-Dose in den Wagen gelegt hat. Dadurch lernt das System, wie eine Coca Cola Dose aussehen kann und kann dann bei vorher noch nicht gesehenen Live-Bildern aufgrund festgestellter Fast-Übereinstimmungen eine Konfidenzbewertung durchführen, um eine Coca Cola-Dose auf einem Live-Bild als solche zu erkennen.

Um solch ein System für andere Warenbereiche zu benutzen, wird es mit neuen Beispielbildern aus dem jeweiligen anderen Warenbereich trainiert. Die gesamte Systematik bleibt die gleiche.

Bei der Kontrolle, ob die Erkennung richtig ist, kann ein ähnliches Verfahren angewendet werden, bei dem es an vielen Stellen ausreicht, nur eine Produktfamilie zu erkennen z.B. die Familie "Coca Cola- Dose", egal ob es sich um eine Dose mit gezuckerter Cola oder "Cola-Zero" oder "Cola-Koffein-frei" etc. Dies erleichtert das Training und macht das System robuster. Auch eine sogenannte "Negative-Identifikation" kann hierzu dienen, wenn bspw. jemand eine Flasche Wein auf einen Scancode von Bananen abwiegt. Das Gewicht passt natürlich, aber die Kameralogik sieht, dass es definitiv keine Bananen sind. Das heißt, dass es gemäß Erfindung für eine höhere Sicherheit gar nicht notwendig ist, die Flasche Wein als solche zu identifizieren, sondern eine negative Identifikation "es sind keine Banenen" reicht aus. Die Ware wird dann in der Liste als "nicht ausreichend erfasst" markiert und muss an der Kasse manuell kontrolliert werden.

Bei Waren aus dem Obst- und Gemüse- Bereich können vorteilhaft die Umrisse der Waren ausgewertet werden. Im Bereich "Getränke" haben viele Artikel genau den identischen Umriss haben, etwa bei Bierflaschen. Hier ergibt die Auswertung der Umrissdaten schnell das Ergebnis "Bierflasche". Zur Unterscheidung der einzelnen Biersorten verschiedener Brauereien steht dann in einem weiteren Schritt die farbliche Erkennung des Bauchetiketts der Flasche im Vordergrund.

Die oben genannten Methoden können also vorteilhaft durch maschinelles Lernen auf die im Ladengeschäft vorhandenen Waren trainiert werden und dann für die automatisierte Bilderkennung der Waren eingesetzt werden. Dabei wird durch den genannten Bildvergleich der bei Einlegen einer Ware in den Wagen aufgenommenen Ist-Bilddaten mit für die Ware in der Datenbank hinterlegten Soll-Bilddaten ein Übereinstimmungsgrad bestimmt. Dieser Bild-Übereinstimmungsgrad fließt zusammen mit anderen Sensordaten in eine zusammenfassende Konfidenzbewertung ein, die maßgeblich für die Qualität der Warenerfassung und für die Bewertung ist, ob eine Ware als ungenügend erfasst in der digitallen Warenliste des Einkaufswagen markiert wird. Die genannten anderen Sensordaten können beispielsweise gemessene Gewichtsdaten der Ware, der Standort des Wagens im Ladengeschäft und andere Daten sein.

Bezüglich der im Stand der Technik vorhandenen klassischen digitalen Einkaufswagen im Einzelhandel löst die vorliegende Erfindung ein zentrales Problem, da Kunden meistens keinerlei Schulung für ein solches System haben und deren technisches Verständnis bei weitem nicht für eine problemlose Nutzung des Systems ausreicht. Dies führt dazu, dass viele Kunden im Einkaufsverlauf scheitern, weil sie etwas falsch machen, aber nicht verstehen, was sie falsch gemacht haben. Das erfindungsgemäße Verfahren behebt unter Anderem genau dieses Problem. Der Kunde kann Fehler machen, diese sind jedoch an der Kasse in kürzester Zeit identifizierbar, wodurch der Kunde das System auch mit kleinen Fehlern nutzen kann, der Händler aber keine Sicherheit einbüßt. Dies führt dazu, dass der Händler massive Vorteile aus der Technik ziehen kann. Die Erfahrung zeigt, dass ein digitaler Einkaufswagen vom Stand der Technik nur für Umsatzanteile von ca. 10-15 % genutzt wird. Der Rest der Umsätze wird durch klassische, nicht-digitale Einkaufswagen erzielt. Durch die Steigerung der Kundenfreundlichkeit bei Einsatz der vorliegenden Erfindung wird der Nutzungsanteil auf 25 bis 30% der Umsatzantzeile geschätzt. Dies führt zur Einsparung von erheblichen Kosten. Dies ist nur möglich, wenn der Kunde Fehler machen darf, die später einfach, simpel, und effizient bei dem erfindungsgemäßen Kontrollverfahren gefunden und auf einfache Weise korrigiert werden können.

### ZEICHNUNGEN

Ausführungsbeispiele der Erfindung sind in den Zeichnungen anhand eines digitalen Einkaufswagens, wie er in Ladengeschäften des Lebensmitteleinzelhandels üblich verwendet wird, dargestellt und in der nachfolgenden Beschreibung näher erläutert.
Figur 1 zeigt ein schematisches Strukturdiagramm mit den wesentlichen Komponenten, die bei der Ausführung des erfindungsgemäßen Verfahrens gemäß einem bevorzugten Ausführungsbeispiel verwendet werden.
Figur 2 zeigt ein schematisches Strukturdiagramm mit den wesentlichen Komponenten, die bei der Ausführung des erfindungsgemäßen Verfahrens gemäß einem zweiten bevorzugten Ausführungsbeispiel verwendet werden.
Figur 3 zeigt schematisch einen Einkaufswagen mit Warenwägefunktion in Seitenansicht mit einer daran aufmontierten, erfindungsgemäßen Scanbox gemäß einem bevorzugten Ausführungsbeispiel.
Figur 4 zeigt die Rückseite auf die Scanbox aus Figur 3, mit beispielhaft dort eingebauter Kamera.
Figur 5 zeigt ausschnittweise den Displayinhalt der Scanbox aus Figuren 3 und 4, in dem Moment, in dem ein erfindungsgemäßer Kontrollschritt nach einer nicht ausreichenden Warenerfassung durchgeführt wird, wobei auf die Darstellung anderer im Warenkorb befindlicher Waren verzichtet wurde, um die Klarheit der Figur zu erhöhen.
Figur 6 zeigt ein schematisches Ablaufdiagramm, das wesentliche Schritte des erfindungsgemäßen Kontrollverfahrens gemäß einem ersten bevorzugten Ausführungsbeispiel beinhaltet, bei dem es im Kassenbereich durch die Scanbox des Einkaufswagens nach Abschluss des Einkaufs durchgeführt wird.
Figur 7 zeigt ein schematisches Ablaufdiagramm, das wesentliche Schritte des erfindungsgemäßen Kontrollverfahrens gemäß einem dritten, bevorzugten Ausführungsbeispiel beinhaltet, bei dem der einkaufenden Person die Gelegenheit gegeben wird, im Laden eine ungenügend erfasste Ware korrigierend nachzuerfassen.
Figur 8 zeigt ein schematisches Interaktions-Ablaufdiagramm, das wesentliche Schritte des erfindungsgemäßen Kontrollverfahrens gemäß einem weiteren, bevorzugten Ausführungsbeispiel beinhaltet, bei dem das Verfahren im Kassenbereich durch ein separat an der Kasse installiertes Kassenprüfmodul nach Abschluss des Einkaufs durchgeführt wird.

### BESCHREIBUNG DER AUSFÜHRUNGSBEISPIELE

In den Figuren bezeichnen gleiche Bezugszeichen gleiche oder funktionsgleiche Komponenten.

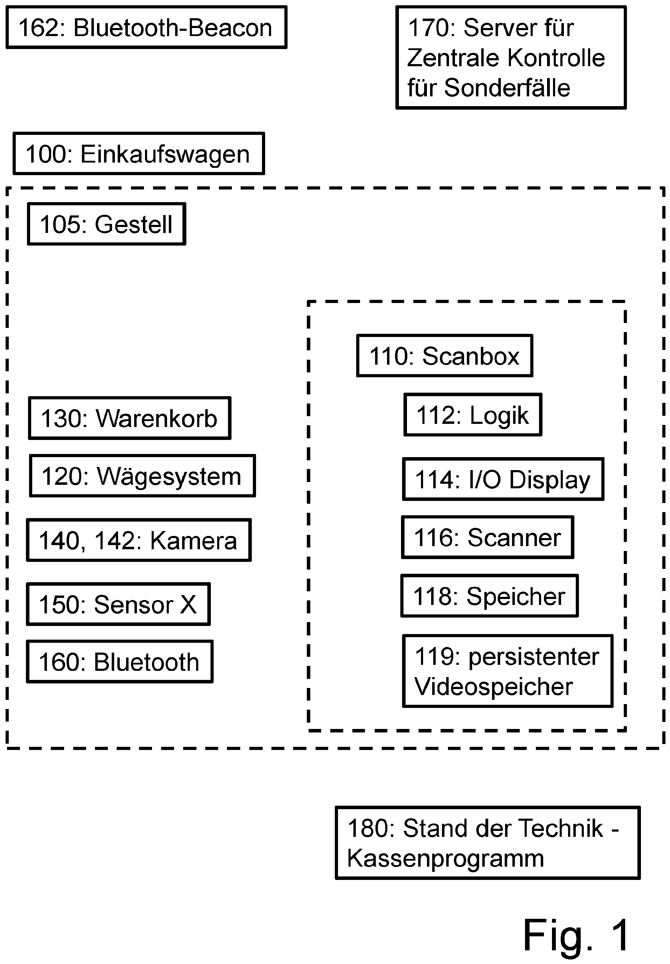

Figur 1 zeigt ein schematisches Strukturdiagramm mit den wesentlichen Komponenten, die bei der Ausführung des erfindungsgemäßen Verfahrens gemäß einem bevorzugten Ausführungsbeispiel verwendet werden. Alle abgebildeten Komponenten sind per WLAN des Ladengeschäfts miteinander verbunden.

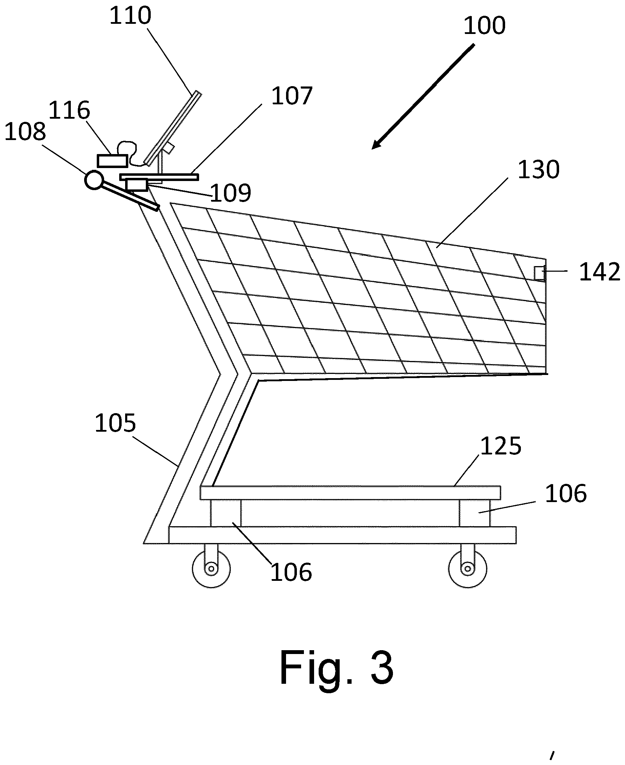

Mit ergänzendem Bezug zu Figur 3 enthält ein erfindungsgemäß ausgerüsteter Einkaufswagen 100 ein auf vier Lenkrollen montiertes Gestell 105 mit drei Wägezellen 106, die den ersten Teil eines Wägesystems 120 bilden, wobei aus Klarheitsgründen wegen der Seitenansicht nur zwei abgebildet sind. Die drei Wägezellen spannen ein Dreieck auf, das eine möglichst große Fläche beinhaltet. Eine Ablagefläche 125 aus einem dicken Drahtgitter für Getränkekisten oder andere großvolumigen Waren ist auf auf den Wägezellen 106 fest montiert. Von der Ablagefläche 125 gestützt und mit ihr stabil verbunden ist ein ein vertikal nach oben verlaufender Korbträger 126 angebracht. Er trägt das Gewicht des auf ihm lagernden Warenkorbs 130. Dieser ist auf seiner Oberseite offen und besteht aus einem Drahtgitter wie üblich. Den zweiten Teil des Wägesystems 120 bildet eine Warenwaage 107, die als Ablage an einer Querstange 109 in der Nähe der Griffstange 108 ausgebildet ist und das Gewicht einer Ware misst, wenn sie vom Kunden auf der Warenwaage abgestellt worden ist.

In einem weiteren, besonders bevorzugten Ausführungsbeispiel kann die Warenwaage 107 entfallen, wenn die Wägezellen 106 des Wägesystems exakt genug auch geringe Gewichte messen können wie etwa 3 Gramm, wenn bereits Waren mit einem Gesamtgewicht von ca. 100 bis 150 kg im Warenkorb enthalten sind. Dann kann auch auf den separaten Schritt verzichtet werden, dass der Kunde jede Ware wiegen sollte, bevor er sie in dem Warenkorb einlegt. Solche Wägezellen sind beispielsweise kommerziell erhältlich bei:
https://www.bosche.eu/waagenkomponenten/waegezellen/plattform-waegezellen/plattform-waegezellen-h20a

Der Einkaufswagen 100 enthält weiter eine an einer Griffstange des Gestells montierte Computereinheit, hier als "Scanbox" 110 bezeichnet, beispielsweise so, wie es in den Patentanmeldungen US 2015/0206121 A1 oder DE 10 2018 132 059 A1 offenbart ist, deren Inhalt durch Bezugnahme hierin einbezogen ist. An dem Gestell 105 ist die erfindungsgemäß ausgestattete Computereinheit fest montiert. Sie enthält neben der üblichen Hardware wie CPU und Speicher 118, unter Anderem die programmierte Logik 112, um die erfindungsgemäßen Verfahren während des Einkaufs ablaufen zu lassen. Ein Touch-Display als I/O-Einheit 114 ist an der Vorderseite der Scanbox zum Kunden gerichtet angebracht und bildet eine robuste Eingabe- und Ausgabeschnittstelle für den Kunden. Ein Handscanner 116 ist mit Kabelverbindung dauerhaft und stabil mit der Scanbox 110 verbunden und kooperiert mit der Logik 112 bei dem Erfassen der auf den Waren angebrachten Codes, meist Strichcodes. Es kann auch alternativ eine Kamera zur Erfassung des Strichcodes an der Ware genutzt werden oder ein Scanner, der fest in der Scanbox verbaut ist.

Zwei Kameras 140 und 142 sind am vorderen bzw am hinteren oberen Rand des Warenkorbs fest montiert. Sie nehmen während des Einkaufens laufend Bilder und Filme im Bereich der Oberseite des Warenkorbs durch ein geeignetes Objektiv auf. Bevorzugt ist eine der Kameras an der Rückseite der Scanbox 110 angebracht.

In anderen Ausführungsbeispielen sind weitere Kameras angebracht, zum Beispiel seitlich an den Wänden des Korbes jeweils eine und eine oder zwei im unteren Bereich des Ablagegitters für großvolumige Waren. Die von den einzelnen Kameras kommenden Bilder werden durch die programmierte Logik 112 synchronisiert verarbeitet. Die Anzahl der Kameras kann bei Bedarf auch größer gewählt werden, um bewusste Manipulationen leichter entdecken zu können. Für den Normalfall des schlichten Vergessens, eine Ware vor dem Einlegen auch einzuscannen, sind zwei Kameras meist ausreichend.

Erfindungsgemäß ist nun ein Speicherbereich 119 vorgesehen, in dem nur diejenigen Videodaten, die das Einlegen solcher Waren in den Korb des Einkaufswagen zeigen, die als "ungenügend erfasst" bewertet wurden, dauerhaft gespeichert sind, zumindest solange, bis die Ware vom Kunden bezahlt worden ist. Da in diesem Speicher 119 nur kurze Videos gespeichert sind, die einen kurzen Einlegevorgang einer Ware zeigen, wird dieser Speicherbereich 119 "Kurzvideospeicher" genannt. Dieser Kurzvideospeicher 119 ist ausreichend groß, um für eine vorgegebene, maximal anzunehmende Anzahl von ungenügend erfassten Waren die genannten Kurzvideos in geeignet hoher Auflösung zu filmen, damit einzelne "Frames" dieser Videos auch für eine automatisierte, bildbasierte WarenErfassung verwendet werden können. Beispielhaft weist eine Videosequenz einen Speicherplatz von 50 Mbyte auf, und es werden maximal 20 ungenügend erfasste Waren pro Einkauf erwartet. Dies ergäbe einen Speicherplatzbedarf von ca. 1 GByte für den Kurzvideospeicher 119. Fällt der Speicherplatzbedarf für einen speziellen Einkauf wider Erwarten größer aus, kann die Logik 112 auf den Speicher am Server 170 im Ladengeschäft über WLAN zugreifen.

Ein weiterer "Sensor X" 150 symbolisiert einen oder mehrere Sensoren, die Daten liefern, die zur Erfassung der eingelegten Waren nützlich sein können. Beispielhaft seien genannt: Ein Mikrofon, das das Auftreffen eines harten Gegenstands wie einer Glasflasche von dem eines weichen Gegenstands unterscheiden kann, ein Erschütterungssensor, der mit dem Wägesystem zusammenarbeitet und die Waage erst aktiv schaltet, wenn am Warenkorb registrierte Erschütterungen abgeklungen sind, ein Helligkeitssensor, ein Wärmesensor, etc.

Ein Bluetooth- System 160 sendet und empfängt Bluetooth-Signale zu bzw. von im Ladengeschäft installierten Bluetooth-Beacons 162 und verfolgt damit den aktuellen Standort des Wagens innerhaöb der Verkaufsfläche. Die Standortdaten werden laufend erfasst und synchron zu den weiter unten beschriebenen Erfassungsdaten separat abgespeichert. Anstelle von Bluetooth können auch andere geeignete Sende-Empfangssysteme verwendet werden.

Ein Server 170 ist im Ladengeschäft vorhanden und über WLAN mit der Software der Logik 112 von jedem einzelnen Einkaufswagen funktional verbunden. Eine erfindungsgemäße Programkomponente des Servers 170 erfasst zur Laufzeit der Einkäufe die jeweiligen digitalen Warenlisten der aktuell benutzten Einkaufswagen. Sie kontrolliert den reibungslosen Ablauf der Programme in der jeweiligen Scanbox 110 und kann bei Ausfall von technischen Komponenten wie zum Beispiel, wenn eine Kamera permanent verdeckt würde, oder ein Betrugsversuch erfolgt, eingreifen, indem sie beispielsweise eine Blinkleuchte am Einkaufswagen in Gang setzt, und ausgibt, dass der betreffende Kunde einen konventionellen Einkaufswagen verwenden möge, oder einem Mitarbeiter in der Kassenzone den Hinweis gibt, diesen Kunden einer vollständigen Kontrolle zu unterziehen.

Wenn der Einkauf beendet ist, weil die letzte Ware eingelegt worden ist, läuft eine Softwarekomponente der Logik 112 in der erfindungsgemäßen Scanbox 110, die die als ungenügend erfassten Waren zur manuellen Nacherfassung anbietet. Details dazu sind weiter unten beschrieben. Sind alle Waren korrekt erfasst, wird die Warenliste an ein herkömmliches Kassenprogramm 180 übergeben und der eigentliche Bezahlvorgang mit dem Kunden wird abgewickelt, wie es im Stand der Technik bekannt ist.

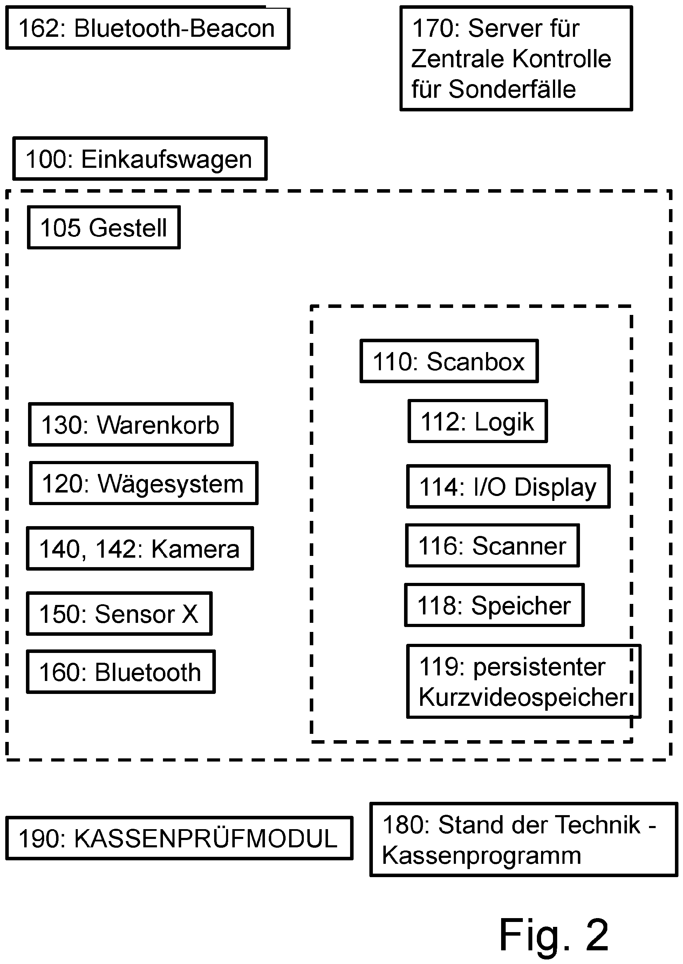

Figur 2 zeigt ein schematisches Strukturdiagramm mit den wesentlichen Komponenten, die bei der Ausführung des erfindungsgemäßen Verfahrens gemäß einem zweiten bevorzugten Ausführungsbeispiel verwendet werden.

Diese unterscheidet sich von dem in Figur 1 dadurch, dass ein an der Kasse implementiertes Kassenmodul 190 anstelle der Softwarekomponente der Logik 112 in der Scanbox 110 die Nachkontrolle und Nacherfassung der ungenügend erfassten Waren übernimmt. Die Warenliste des aktuellen, mit einer individuellen Einkaufswagen-ID ausgestatteten Einkaufswagens wird dafür per WLAN oder RFID-Tag an das Kassenmodul 190 übermittelt, ebenso für jede ungenügend erfasste Ware ein Link zu dem separat dazu abgespeicherten Kurzvideo, das den zugehörigen Einlegevorgang der Ware zeigt.

Der Kunde soll die Ware vor oder nach dem Scanvorgang des Warenetiketts wiegen, jedenfalls bevor er sie in den Korb 130 einlegt.

In einem besonderen, bevorzugten Ausführungsbeispiel ohne separate Warenwaage übernimmt das Wägezellensystem das genaue Ermitteln des Warengewichts jeder eingelegten Ware. Die Wägezellen sind dabei so empfindlich, dass eine geringe Belastung des Warenkorbs von bis zu 3 Gramm durch Einlegen einer sehr leichten Ware auch bei voller Beladung des Warenkorbs mit beispielsweise 100 kg gemessen und weiterverarbeitet werden kann.

Die Wägemessdaten werden im Ausführungsbeispiel mit separater Warenwaage über eine versteckt und geschützt verlegte Kabelverbindung oder über eine verschlüsselte drahtlose Verbindung vom Wägesystem 120 , also von den Wägezellen 106 und von der Warenwaage 107 an die Scanbox 110 zur weiteren Bearbeitung weitergeleitet. Diese ermittelt mittels der Logik 112 aus diesen Daten das Gesamtgewicht des Warenkorbs einschließlich aller darin befindlichen Waren. Aus dem Gewicht vor dem Einlegen der aktuellen Ware ergibt sich durch Differenzbildung das Gewicht der aktuell zuletzt eingelegten Ware. Dies sollte mit dem Messwert aus der Warenwaage 107 übereinstimmen.

Das Warengewicht dient neben dem Strichcode oder einem anderen Code und einem oder mehreren eventuell von einer Kamera 140, 142 erfassten Bildern der Ware als zusätzliches Kriterium, um eine Ware zu klassifizieren und sie korrekt zu erfassen.

Das Display der Scanbox 110 zeigt dem Kunden alle für ihn wichtigen Informationen, insbesondere Eigenschaften der zuletzt eingelegten Ware, seine digitale Warenliste, die alle in den Warenkorb oder auf die unten liegende Ablagefläche gelegten Waren mit Klartext und Preis aufführt, sowie ein Feld für wichtige Handlungshinweise an den Kunden, wo er auch Eingaben wie "JA" / "Nein" / "Abbruch" / "Hilfe" tätigen kann. Insbesondere wird dem Kunden angezeigt, wenn eine Ware in den Korb 130 eingelegt worden ist, die nicht ausreichend klar genug erfasst worden ist. Er kann dann durch Drücken einer Bedienfläche die Ware nacherfassen. Erfindungsgemäß kann er aber auch die Nacherfassung überspringen. Dann erscheint ein Hinweis, dass die Ware an der Kasse nacherfasst wird.

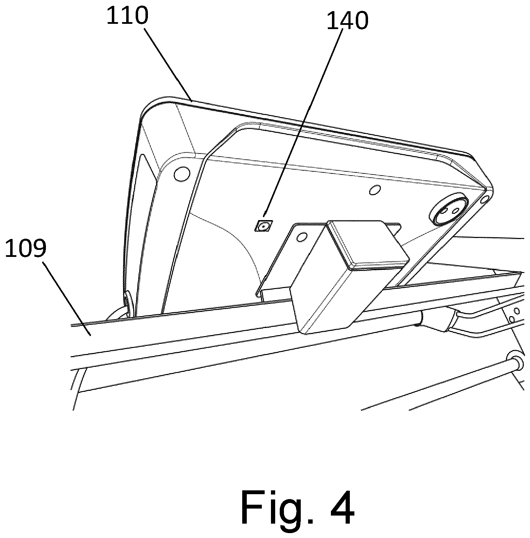

Figur 4 zeigt die Rückseite auf die Scanbox 110 aus Figur 3, mit dort eingebauter Kamera 140.

Die Kamera 140 ist so ausgerichtet, dass sie den kompletten Warenkorb und seinen oberen Rand mit etwas freiem Überstand als Bildausschnitt aufnimmt. Wenn Waren übereinander liegen, kann es sein, dass die unter darunterliegenden Waren verdeckt sind, was aber tolerierbar ist, weil Kamera 140 insbesondere den Einlegevorgang einer Ware zeigt, der ja immer im sichtbaren, und von keiner anderen Ware verdeckten Einlegevorgang zeigt, weil die Waren ja von oben her eingelegt werden. Legt der Kunde bei bereits voll bedecktem Boden des eigentlichen Warenkorbs 130 eine Ware auf die untere Ablagefläche 125, so wird der Einlegevorgang von einer oder mehreren zusätzlich an dem Gestell 105 angebrachten, immer mitlaufenden Kameras bildlich erfasst.

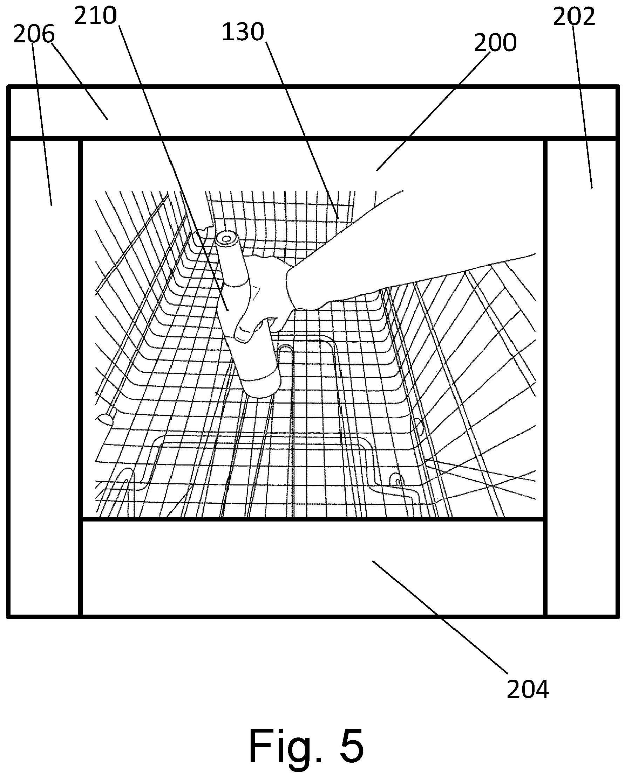

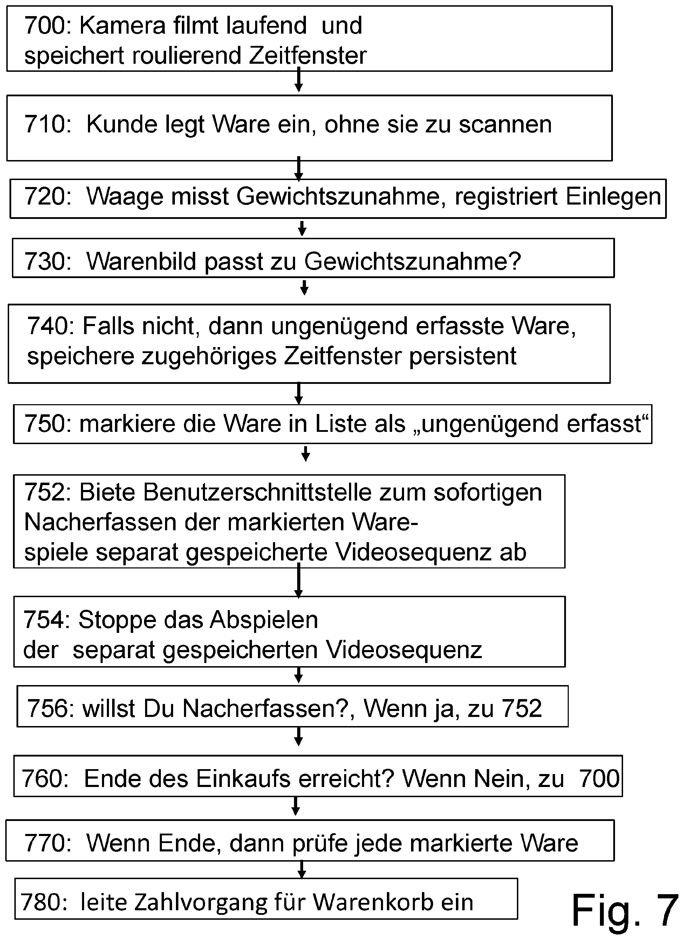

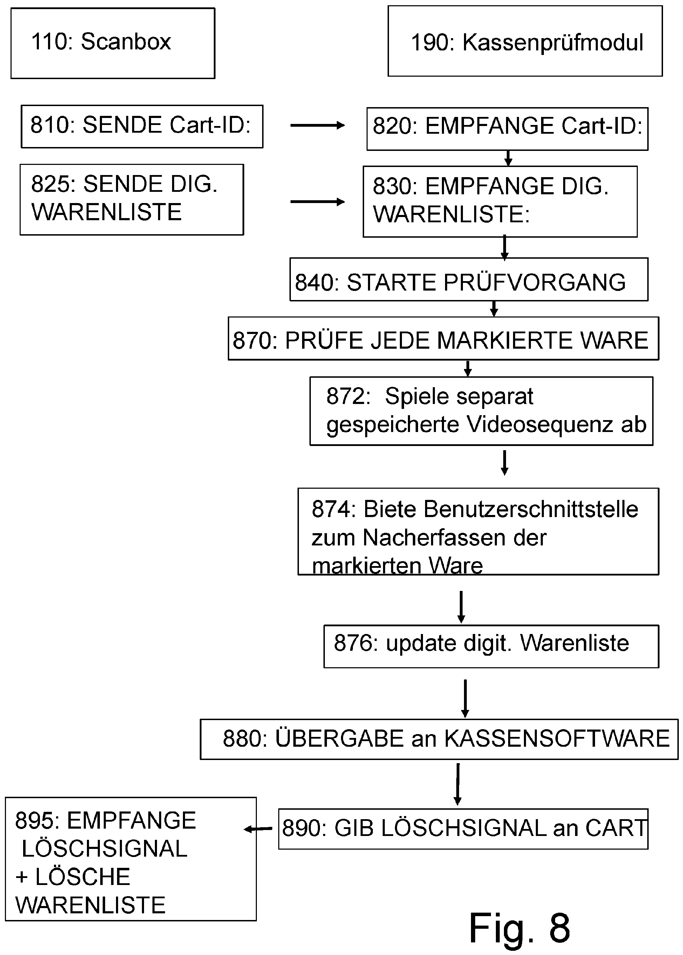

Figur 5 zeigt den Displayinhalt der Scanbox 110 aus Figuren 3 und 4 in dem Moment, in dem ein erfindungsgemäßer Kontrollschritt 752 in Figur 7 bzw. 852 in Figur 8 nach einer nicht ausreichenden Warenerfassung durchgeführt wird.

Insbesondere ist ein großer Teilbereich des Displays durch ein Bildfeld 200 ausgefüllt, das zur Wiedergabe von Kurzvideos dient, die während des Einlegens von Waren den oberen Bereich des Warenkorbs zeigen. Insbesondere sieht man einen Arm des Kunden, wie er mit seiner Hand die Ware gegriffen hält und in den Warenkorb legt.

Ein weiterer Teilbereich 202 zeigt die digitale Warenliste, in der die bereits erfassten Waren aufgeführt sind. Innerhalb der Liste kann der Kunde navigieren und einzelne Waren anklicken. Ein weiterer Teilbereich 204 zeigt Einzelheiten der Ware wie Klarname, Gewicht, und evtl. Artikelnummer, die gerade in der Warenliste angeklickt ist. Weitere Teilbereiche 206 sind für andere Zwecke verwendbar, wie etwa ein konkreter Werbehinweis oder Statusmeldungen der Logik 112, die beispielsweise lauten könnte:
"gescannte Ware passt nicht zum erwarteten Warengewicht - Vorgang bitte wiederholen!" oder
"es wurde eine Ware mit 451 g Gewicht ohne scan eingelegt - Bitte die Ware einscannen!"

Die genannten Hinweise können je nach Komplexität auch durch entsprechende Symbole in einer der Displayflächen 202, 204, 206 zusätzlich graphisch dargestellt werden.

Wird eine Ware ohne Scanvorgang und ohne Abwiegen in Wagge 107 in den Korb eingelegt, dann erscheint in der Warenliste eine Fehlermeldung mit dem Sinngehalt "nicht registrierter Artikel".

Der Kunde kann in den genannten Fällen daraufklicken und bekommt ein Kurzvideo im großen Teilbereich des Displays gezeigt, das genau den Einlegevorgang dieser "unregistrierten Ware", oder nicht ausreichend erfassten Ware zeigt. Der Mitarbeiter an der Kasse oder der Kunde selbst kann dann die auf dem Video sichtbare Ware dem Korb wieder entnehmen, einscannen und wieder einlegen.

Ein anderer Teilbereich des Displays zeigt ganz links den Status der aktuellen Überprüfung und den Status bei einer eventuellen vom Kunden durchgeführten Nacherfassung der Ware.

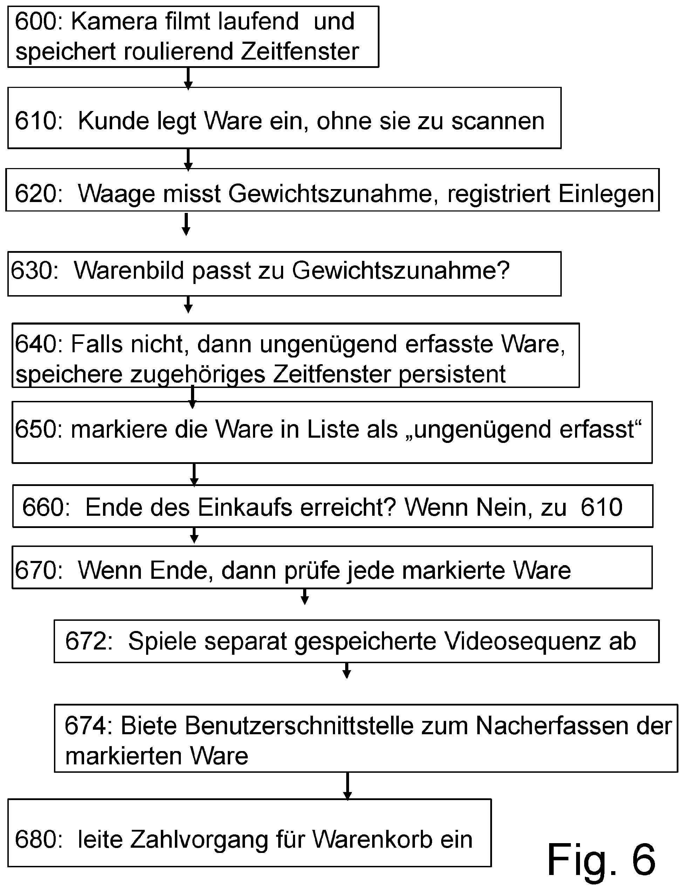

Figur 6 zeigt ein schematisches Ablaufdiagramm, das wesentliche Schritte des erfindungsgemäßen Kontrollverfahrens gemäß einem ersten bevorzugten Ausführungsbeispiel mit Bilderkennung beinhaltet, bei dem es im Kassenbereich durch die scanbox des Einkaufswagens nach Abschluss des Einkaufs durchgeführt wird.

In einem ersten Schritt 600 wird das Programm gestartet und werden die Kameras aktiviert. Sie speichern das, was aufgenommen wird rollierend in einem Zeitfenster von etwa zwei Minuten ab. Der Speicherbereich wird also laufend neu überschrieben. Die aktuelle Vergangenheit ist für die Dauer des genannten Zeitfensters also immer zugreifbar.

Ein Kunde legt nun in einem Schritt 610 eine Ware ein, ohne sie zu scannen und ohne sie separat zu wiegen. Oder der Kunde legt eine durch die Waage als falschen Artikel identifizierte Ware in den Warenkorb ein, indem er eine Ware A einscannt, jedoch eine Ware B einlegt.

Das Wägesystem misst in den genannten Fällen immer eine Gewichtszunahme, die mit der eingelegten Ware verknüpft ist und registriert damit in einem Schritt 620 das Einlegen einer Ware.

Die Logik 112 prüft nun in einem Schritt 630, ob eines oder mehrere Bilder, die beim Einlegen der Ware aufgenommen worden sind, ausreichend klar ist /sind, um die Ware anhand des/ oder der Bilder in Kombination mit der Gewichtszunahme zu bestimmen.

Falls dies nicht der Fall ist, dann werden in einem Schritt 640 die Videodaten und, falls vorhanden die genannten Bilddaten, die den Einlegevorgang zeigen, separat abgespeichert, und zwar persistent für Zeitspanne des Einkaufs des Kunden. In einem Schritt 650 wird die aktuell eingelegte Ware als "ungenügend erfasst" in der digitalen Warenliste des Kunden markiert.

Die Scanbox weist ihn im oben genannten Fall, dass der Scan der Ware A nicht zum Gewicht der Ware B passt, darauf hin, dass er die Ware nacherfassen möge. Wenn der Kunde den Hinweis ignoriert, dann wird der Posten in der Warenliste als "ungenügend erfasst" markiert, und es steht in der Liste sinngemäß "Falscher Artikel". An der Kasse erscheint dann bei Abarbeiten der markierten waren die Videosequenz, in der der Mitarbeiter sieht, welche Ware falsch eingelegt wurde.

Dieses Schema wird fortgeführt, bis der Einkauf beendet ist und der Kunde in die Kassenzone gelangt. Nun beginnt ein automatisierter Prüfungvorgang 670, ob alle Waren in der digitalen Warenliste des Kunden ausreichend gut erfasst worden sind. Das wird zweckmä-ßig dadurch kontrolliert, indem die Liste nach Waren durchsucht wird, die im Schritt 650 oben markiert worden waren. Ausgelöst wird der Beginn dieser Prüfung durch ein manuelles Betätigen einer Schaltfläche "Jetzt Einkauf-prüfen" an der Scan-Box 110. Alternativ oder in Kombination kann dies auch automatisiert erfolgen, nachdem der Einkaufswagen eine "Kassenzone" erreicht hat, was durch einen Signalaustausch zwischen einem Bluetooth-Beacon am Beginn der Kassenzone zusammen mit dem Bluetooth System am Einkaufswagen durchgeführt werden kann.

Trifft der Prüfvorgang 670 auf eine in der Warenliste als "ungenügend erfasst" markierte Ware, dann wird in einem Schritt 672 die separat abgespeicherte Videosequenz im Display des Einkaufswagens automatisch abgespielt, die beim Einlegen dieser Ware in den Warenkorb aufgenommen worden ist. Der Kunde oder das Kassenpersonal sieht damit sofort, welche Ware nacherfasst werden muss, kann diese Ware in dem Warenkorb greifen, herausholen und zum Beispiel durch manuelles Einscannen des Strichcodes nacherfassen. Hierzu öffnet sich automatisch eine entsprechende Schaltfläche, die zum Nacherfassen der Ware auffordert. Das im Einkaufswagen installierte Wägesystem 120 registriert dabei eine Gewichtsabnahme, die dem Gewicht der entnommenen Ware entsprechen sollte. Dies dient der zusätzlichen Sicherheit bei der Erfassung der Ware.

Diese Nacherfassung ist bei ausreichend sensitiv ausgebildeten Wägezellen 106 so ausgestaltet, dass der Kunde oder das Kassenpersonal eine Ware, die nachzuerfassen ist, aus dem Warenkorb nimmt, sie einscannt und sie wieder einlegt. Bei weniger sensitiven Wägezellen 106 muss dies durch separates Abwiegen der Ware an der Waage 107, oder an einer anderen ggf im Kassenbereich stehenden Waage erfolgen. Durch diesen Vorgang wird erreicht, dass alle Waren, die gekauft worden sind, gewogen worden sind. Damit kann die Warendatenbank mit den tatsächlichen Gewichtsangaben gefüllt werden, was ab einer ausreichend großen Anzahl der Angaben die automatisierte Warenerkennung für eine bestimmte Warengruppe immer besser macht.

Dieses Ablaufschema mit den Schritten 672 und 674 wird für alle als "ungenügend erfasst" markierten Waren durchgeführt.

Der Kunde kann Fehler bei der Nacherfassung einer Ware die Warenliste auch ohne Kamera jederzeit korrigeren, wie im Folgenden beschrieben wird:
Wenn der Kunde bzw. der Nutzer des erfindungsgemäßen Einkaufswagens eine Ware ohne Erfassung einlegt, so gibt die Scanbox 110 eine Fehlermeldung aus. Angenommen, der Nutzer ignoriert diese und erfasst die nächste Ware. Die nicht erfasste Ware taucht nun in der Liste als "nicht registrierte Ware" auf. Der Nutzer hat nun jederzeit die Möglichkeit dies zu korrigeren. Das kann direkt nach der zweiten Ware sein, aber auch beispielsweise später, nach dem er beispielsweise zehn weitere Waren korrekt gescannt und eingelegt hat. Der Kunde / Nutzer wird auf die "nicht registrierte Ware" in der digitalen Warenliste aufmerksam, schaut in den Wagen und könnte direkt erkennen: "Das muss das Toastbrot gewesen sein". Die Logik 112 hatte ja ermittelt und gespeichert, dass beispielsweise 453g unregistriert an einer gewissen Position der digitalen Warenliste eingelegt worden waren. Der Kunde / Nutzer entnimmt nun das Toastbrot und die Logik 112 registriert, dass dem Warenkorb 453g entnommen wurden. Die "nicht registrierte Ware" verschwindet dann sofort aus der Liste. Der Nutzer kann diesen Artikel nun korrekt scannen. Er hat somit seinen Erfassungsfehler korrigiert, ohne dass hierfür eine Kamera benötigt wurde. Denn der Wagen kann über das nichtregistrierte, eingelegte Gewicht, welches später wieder entnommen wird die genannte Ware zuordnen.

Der Kunde bzw. Nutzer kann sogar retrospektiv einen späteren Erfassungsvorgang zuordnen. Der Nutzer nimmt dazu in dem genannten Beispiel das Toastbrot erst gar nicht aus dem Wagen raus, sondern nimmt den mobilen Handscanner und erfasst das Toastbrot im Wagen liegend per Scan. Die Logik 112 registriert dann, dass die gerade gescannten 453g genau zu der Ware passen, die beispielsweise vor zehn Erfassungsvorgängen als "nicht registrierter Artikel" eingelegt wurde und ordnet dieser nun das Toastbrot zu. Auch auf diese Weise ist die digitale Warenliste wieder in einem korrekten Zustand. Es wird also eine sogenannte "retrospektive Artikelzuordnung" möglich gemacht.

Optional können bei den letztgenanten Varianten die Kurzvideos als zusätzliche Hilfestellung dienen.

Sind alle Waren ausreichend gut erfasst, dann wird die Warenliste samt Preisen an ein ohnehin im Ladengeschäft vorhandenes Kassenprogramm übertragen und der Zahlvorgang wie üblich in Gang gesetzt, Schritt 680.

Erfindungsgemäß wird damit ein schnell durchführbares, digital unterstütztes Einkaufen ermöglicht, das sehr kundenfreundlich ist, weil das erfindungsgemäße, automatisierte Verfahren zum Erfassen und Nachverfolgen von Waren, die beim Einkauf in den Warenkorb eines digitalen Einkaufswagens eingelegt werden, "nachgiebig" für den Kunden ist, da es nicht auf einer sofort beim Einlegen einer Ware in den Warenkorb durchzuführenden korrigierenden Nacherfassung der Ware besteht, sondern den Kunden in Ruhe weitereinkaufen lässt, auch wenn etwas beim Erfassen einer Ware nicht geklappt haben sollte. Gleichzeitig kann das Kassenpersonal aber sehr schnell und einfach den gesamten Warenkorb kontrollieren und mangelhaft erfasste Waren manuell aus dem "Warenhaufen" im Korb "herauspicken", ohne dass ein mühsames und zeitraubendes Abgleichen der Warenliste der korrekt erfassten Waren mit den Waren im Warenkorb erfolgen braucht, das lediglich dazu dient, eine nicht erfasste Ware in dem ""Warenhaufen" im Warenkorb überhaupt erst einmal zu entdecken.

In einem weiteren bevorzugten Ausführungsbeispiel werden die eingelegten Waren ohne Bildverarbeitung nur anhand des Scans identifiziert und mittels des registrierten Warengewichts überprüft. Dies setzt voraus, dass die Warendatenbank ein erwartetes Gewicht jeder Ware inklusive eines vorgegebenen Toleranzbereichs abgespeichert und zur Abfrage beim Einscannen der Ware bereit hält. Die Warendatenbank speichert daher für jede Ware eine tolerierbaren "Gewichtskorridor" als erwartetes Gewicht der Ware. Passt der Scancode und das gemessene Gewicht zum erwarteten Gewicht einer eingelegten Ware, dann gilt die Ware als korrekt erfasst. Gibt es Unstimmigkeiten, so wird die Ware als "nicht ausreichend erfasst" in der Warenliste des Kunden markiert. Legt der Kunde eine Ware ein, ohne sie zu scannen, analog zu Schritt 610, so registriert die Waage oder/ und das Wägezellensystem das Einlegen einer Ware, analog zu Schritt 620 und fordert analog zu Schritt 674 zum Nachscannen auf. Indem die tatsächlichen, gemessenen Gewichtsangaben bei korrektem Scan oft genug in der Datenbank gespeichert werden kann der Toleranzbereich des Gewichts jeder Ware oder Warengruppe durch den Betrieb des erfindungsgemäßen Verfahrens im Laufe der Zeit verschärft werden, indem ab einer ausreichend großen Anzahl von gemessenen Gewichtsangaben der Toleranzbereich etwas kleiner gemacht wird als durch seine Anfangswerte vorgegeben.

Im Folgenden werden einige konkrete Beispiele einer automatisierten Konfidenzbewertung für eine bestimmte Ware gegeben, die im erfindungsgemäßen Verfahren bei der Bewertung erfolgen, ob die Ware, die in den Warenkorb eingelegt worden ist, ohne sie zu scannen, als "ungenügend erfasst" bewertet und in der digitalen Warenliste des Kunden entsprechend markiert werden. Die Konfidenzbewertung ordnet sich in ein prozentuales Schema ein, das Prozentwerte zwischen 0 % für "völlig ungenügend erfasste Ware" und 100% für "sehr sicher erfasste Ware" kontinuierlich oder in feineren Stufen als nachfolgend dargestellt, ermöglicht. Als "Sensordaten" im Sinne der Erfindung werden hierbei lediglich gemessene Gewichtsdaten der Ware, die von der Warenwaage 107 gemessen worden sind oder den Wägezellen 106 erfasst und durch Differenzbildung zwischen zwei gemessnen Warenkorbgewichten vor bzw. nach Einlegen der Ware in den Warenkorb ermittelt worden sind, verwendet. Jede Ware oder Warengruppe hat dabei einen Toleranzbereich für ihr erwartetes Gewicht, das in der Warendatenbank gespeichert ist. Dieser Bereich ist naturgemäß warenspezifisch unterschiedlich groß, sowohl relativ als auch in absoluten Gewichtsangaben, was zum Beispiel für Waren im Bereich Obst und Gemüse besonders extrem zutrifft.

Alternativ oder in Kombination werden die von einer Kamera aufgenommenen Bilder der Ware verwendet. Dies sind vorzugsweise diejenigen "Frames" der von einer "Bordkamera" 140, 142 des Einkaufswagens aufgenommenen Videosequenz, die am aufschlussreichsten für die Erfassung einer Ware sind, also beispielsweise bei einer Flasche diejenigen Frames, die das Bauchetikett der Flasche wenigstens teilweise zeigen, oder bei einer Umverpackung einer Ware deren Oberseite mit der Hersteller und-oder der Produktmarke zeigen.

### Konfidenzbereich 0 % - 30 %:

Eine derart niedrige Konfidenz bedeutet ein fast mit Sicherheit anzunehmender falscher oder ein unterbliebener Scanvorgang; Diesem Konfidenzbereich wird zum Beispiel eine Weinflasche zugeordnet, wenn die Gewichtsabweichung zwischen Soll- und Istgewicht größer als 3 % ist, bzw., wenn die automatisierte Bilderkennung eine nur zwischen 0% und 30% liegende Übereinstimmung zwischen einem in der Warendatenbank vorhandenen "Soll-Bild" der Ware (oder mehren davon) und dem aufgenommenen Bild der Ware ergibt. Hier erzwingt das erfindungsgemäße Verfahren ein Nachprüfen manuell an der Kasse durch Kassiererin.

### Konfidenzbereich 30% bis 50%:

Diesem Konfidenzbereich wird zum Beispiel eine 10-Eierpackung zugeordnet, wenn die Gewichtsabweichung zwischen Soll- und Istgewicht größer als 10% ist und die automatisierte Bilderkennung eine zwischen 40% und 70% liegende Übereinstimmung zwischen einem der Sollbilder aus der Warendatenbank und dem aufgenommenen Bild ergibt. Hier erzwingt das erfindungsgemäße Verfahren ein manuelles Nachkontrollieren.

### Konfidenzbereich 50% bis 70%:

Diesem Konfidenzbereich wird zum Beispiel eine Flasche Olivenöl zugeordnet, wenn die Gewichtsabweichung zwischen Soll- und Istgewicht größer als 4% ist und die automatisierte Bilderkennung eine 50 % bis 80 % Übereinstimmung zwischen einem der Sollbilder aus der Warendatenbank und dem aufschlussreichsten, aufgenommenen Bild ergibt. Hier erzwingt das erfindungsgemäße Verfahren ein manuelles Nachkontrollieren.

Diesem Konfidenzbereich von 50-70% wird zum Beispiel auch eine Pralinenschachtel zugeordnet, wenn die Gewichtsabweichung zwischen Soll- und Istgewicht kleiner als 3% ist und die automatisierte Bilderkennung eine mindestens 60 % Übereinstimmung zwischen einem der Sollbilder aus der Warendatenbank und dem aufschlussreichsten, aufgenommenen Bild ergibt. Hier erzwingt das erfindungsgemäße Verfahren ein manuelles Nachkontrollieren.

70% bis 90% bedeutet: diesem Konfidenzbereich wird zum Beispiel eine vorabgepacktes Stück Käse zugeordnet, wenn die Gewichtsabweichung zwischen Soll- und Istgewicht nicht existiert und die automatisierte Bilderkennung eine mindestens 90 % Übereinstimmung zwischen zwischen einem der Sollbilder aus der Warendatenbank und dem aufschlussreichsten, aufgenommenen Bild ergibt. Hier erzwingt das erfindungsgemäße Verfahren ein manuelles Nachkontrollieren.

Oder: diesem Konfidenzbereich von 70-90% wird zum Beispiel eine Pralinenschachtel zugeordnet, wenn die Gewichtsabweichung zwischen Soll- und Istgewicht kleiner als 3% ist und die automatisierte Bilderkennung eine mindestens 80 % Übereinstimmung zwischen einem der Sollbilder aus der Warendatenbank und dem aufschlussreichsten, aufgenommenen Bild ergibt. Hier erzwingt das erfindungsgemäße Verfahren ein manuelles Nachkontrollieren.

### 90 % bis 100%:

Diesem Konfidenzbereich wird zum Beispiel eine Packung Kaffee zugeordnet, wenn die Gewichtsabweichung zwischen Soll- und Istgewicht kleiner als 3% ist oder / und wenn die automatisierte Bilderkennung eine mindestens 90 % Übereinstimmung zwischen einem der Sollbilder aus der Warendatenbank und dem aufschlussreichsten, aufgenommenen Bild ergibt. Hier erzwingt das erfindungsgemäße Verfahren kein manuelles Nachkontrollieren.

Figur 7 zeigt ein schematisches Ablaufdiagramm, das wesentliche Schritte des erfindungsgemäßen Kontrollverfahrens gemäß einem dritten, bevorzugten Ausführungsbeispiel beinhaltet, bei dem der einkaufenden Person die Gelegenheit gegeben wird, im Laden vor Betreten der Kassenzone eine ungenügend erfasste Ware korrigierend nachzuerfassen. Die Schritte 700 bis 750 entsprechen der Beschreibung der Schritte 650 bis 650 und Figur 6. Nun wird angenommen, dass der Kunde die die "ungenügend erfasste Ware" korrigierend nacherfassen möchte. Er sieht diese Ware in seiner digitalen Warenliste auf dem Display der Scanbox als "nicht registrierte Ware". Der Kunde kann sie dort anklicken" Schritt 752 . Sobald er dies tut, wird das abgespeicherte Kurzvideo auf dem Display gezeigt und ggf. wiederholt gezeigt. Der Kunde kann mit dieser Information die dort gezeigte Ware greifen, er kann sie - falls notwendig bei nicht ausreichend sensitiven Wägezellen 106 - auf der Warenwaage 107 separat wiegen - und noch einmal einscannen. Ergibt ein Abgleich zwischen Sollgewicht und Istgewicht und ein Abgleich zwischen Sollbild und aufgenommenen Istbild der Ware eine ausreichend hohe Konfidenz, so wird die Ware als "ausreichend erfasst" in der Warenliste gespeichert. Die Videosequenz wird dann gestoppt, Schritt 754. Die vorherige "unzureichend-erfasst" -Markierung wird gelöscht. Ergibt sich beim genannten Abgleich eine zu niedrige Konfidenz, so bleibt die Ware als "ungenügend erfasst" in der Warenliste markiert. Die Videosequenz wird dann auch gestoppt, Schritt 754. Das Verfahren ist sodann bereit, die nächste Ware zu erfassen, siehe Schritte 700 ff. und den Einkauf fortzusetzen bzw. zu beenden, siehe Schritte 756, 760 , 770 und die Beschreibung zu Figur 6.

Figur 8 zeigt ein schematisches Interaktions-Ablaufdiagramm, das wesentliche Schritte des erfindungsgemäßen Verfahrens gemäß einem weiteren, bevorzugten Ausführungsbeispiel beinhaltet, bei dem das Verfahren im Kassenbereich durch ein separat an der Kasse installiertes Kassenprüfmodul nach Abschluss des Einkaufs durchgeführt wird.

Dazu wird angenommen, dass der Kunde seinen Einkauf beenden möchte und er in seinem Warenkorb möglicherweise nicht ausreichend erfasste Waren hat. In der Kassenzone sind beispielsweise vier Kassen angeordnet. Jede besitzt ein Kassenprüfmodul 190 - siehe

Figur 2 - als Hardware-Software-Kombination. Diese beinhaltet im Wesentlichen dieselbe Prüf-Funktionalität zum Prüfen einer digitalen Warenliste wie die Scanbox 110 am Einkaufswagen. Wenn der Kunde an der Reihe ist und Zugang zu einer der Kassen hat, dann sendet sein Einkaufswagen automatisch seine Einkaufswagen-ID, auch als Cart-ID bezeichnet, über eine NFC- Kommunikation oder über ein anderes drahtloses Sende-Empfangsprotokoll an das für ihn zuständige Kassenprüfmodul, Schritt 810. Das Kassenprüfmodul 190 empfängt die Cart-ID. Ebenso wird die digitale Warenliste des Kuden über WLAN an den Kontroll-Server 170 des Ladengeschäfts übermittelt, Schritt 825. Das Kassenprüfmodul 190 ruft die Cart-ID vom Server 170 ab und empfängt sie über WLAN, Schritt 830.

Diese Cart-ID kann beispielsweise auch eine vier- oder mehrstellige Nummer sein, die an der Vorderfront des Einkaufswagens gut lesbar befestigt ist, und vom Kassenpersonal manuell eingegeben wird.

Das Kassenprüfmodul 190 startet nun das Kontrollverfahren, mit dem als "unzureichend erfasst" markierte Waren in der Warenliste der Cart-ID nacherfasst werden sollen, Schritt 840.

Sodann wird in einem Prüfvorgang 870 für jede markierte Ware anhand der in Schritt 872 abgespielten Videosequenz, die deren Einlegevorgang in den Warenkorb zeigt, die Benutzerschnittstelle zum Nacherfassen der Ware angeboten, Schritt 874. Dies erfolgt dann in jedem Fall durch das Kassenpersonal, auch in schwierigen Fällen bei beschädigtem oder unlesbaren Scancode notfalls durch Eingabe der Artikelnummer. Die digitale Warenliste wird auf den neuens Stand gebracht, inmdem die Markierung gelöscht wird, Schritt 876.

Nachdem dieser Vorgang für alle markierten Waren wiederholt wurde, sendet das Kassenprüfmodul die korrigierte digitale Warenliste and die Kassensoftware, Schritt 880 zur Bezahlung durch den Kunden.

Hat der Kunde bezahlt, so wird die digitale Warenliste an das Warenwirtschaftssystem weitergegeben und sodann von der Scanbox 110 samt der roulierend oder persistent gespeicherten Daten gelöscht, Schritt 890, wobei eine Kopie optional noch für einen begrenzten Zeitraum gesondert für Reklamationszwecke am Server 170 abgespeichert bleiben kann. Die Scanbox 110 ist dann wieder bereit für den nächsten Einkauf.

Der Gegenstand der vorliegenden Erfindung kann in Hardware, Software oder einer Kombination aus beiden realisiert werden. Eine beliebige Art von Computersystem oder Computergeräten ist dafür geeignet, das erfindungsgemäße Verfahren ganz oder in Teilen durchzuführen. Eine typische Hardware-Software-Kombination für die vorliegende Erfindung wäre ein Tabletcomputer, der an einem Einkaufswagen befestigt ist, mit einer tragbaren Scaneinheit zum Erfassen von Waren mittels eines scanbaren Codes, mit einer betriebsbereit gekoppelten oder koppelbaren Verbindung zu einer Kamera, die am Einkaufswagen im oberen Bereich des Korbes befestigt ist, einem Arbeitsspeicher zum Speichern eines Programmcodes, der die einzelnen Schritte der beanspruchten Verfahren ganz oder in Teilen ausführen kann, mit einem WLAN-Modul zur Verbindung zu einem Servercomputer des Einkaufsladens, dem der Einkaufswagen und viele andere Einkaufswagen gleicher Bauart zugeordnet ist, der ein Warenwirtschaftssystem ausführen kann, und einem Bluetooth-Modul zum Orten des Einkaufswagens mittels geeignet in der Verkaufsfläche platzierter Bluetooth-Beacons.

Die vorliegende Erfindung kann auch in ein Computerprogramm-Erzeugnis eingebettet sein, das sämtliche Merkmale enthält, die eine Implementierung der hierin beschriebenen Verfahren ermöglichen, und die, wenn sie in ein Computersystem geladen wird, dazu imstande sind, diese Verfahren auszuführen, wenn es mit den passenden Daten versorgt wird.

Obwohl die vorliegende Erfindung anhand von bevorzugten Ausführungsbeispielen vorstehend beschrieben wurde, ist sie darauf nicht beschränkt, sondern auf vielfältige Weise modifizierbar.

Das temporäre, als roulierend beschriebene Speichern und Überschreiben kann auch so erfolgen, dass immer wenigstens zwei aufeinander folgende Sequenzen zwischengespeichert gehalten werden und erst bei der dritten Sequenz die erste überschrieben wird. Je nach vorhandenem Speicherplatz kann dieses Schema auch erweitert werden

Es kann auch ein zweites und für den Kunden nicht erkennbares Überwachungsschema der digitalen Warenliste parallel zu dem oben beschriebenen Verfahren nur im Hintergrund mitlaufen, das die tatsächlichen Gewichtsangaben, die das Wägesystem 120 über die Wägezellen 106 oder /und die Warenwaage 107 liefert, mit den für die Ware in der Warendatenbank gespeicherten Gewichtsangaben vergleicht. Bei auffälligen Gewichtsdifferenzen kann ein Hinweis erscheinen, dass die Ware im Kassenbereich auf jeden Fall manuell geprüft werden muss. Wenn die Ware deutlich mehr als erwartet wiegt, dann besteht der Verdacht, dass ein kleinerer Artikel in die Umverpackung eingelegt worden ist. Falls sie deutlich weniger wiegt, kann es sein, dass einzelne Bestandteile der Ware entnommen worden sind, es kann zum Beispiel ein Ei in einer 10er- Packung fehlen. In beiden Fällen kann außerdem geprüft werden, ob ein falscher, eventuell sehr hochpreisiger Artikel Artikel in der eingescannten Umverpackung einer niedrigpreisigen Ware liegt.

Wenn der Kunde eine Ware einlegt, aber nahezu zeitgleich innerhalb von beispielsweise 0,5 Sekunden eine andere, bereits erfasste oder nicht erfasste Ware aus dem Warenkorb entnimmt, oder wenn der Kunde mehrere Waren gleichzeitig in den Warenkorb einlegt, die er nicht vorher einzeln gescannt hat, dann gibt das erfindungsgemäße Verfahren ebenfalls eine "nicht registrierte Ware" in der Warenliste an und speichert die Videosequenz im Kurzevideospeicher 119.

Als Kommunikationssysteme können außer den genannten Systemen wie WLAN, Bluetooth, NFC alle geeigneten Systeme und Protokolle verwendet werden, die im Stand der Technik bekannt sind, sofern sie für den konkreten Anwendungsfall wie hier beschrieben, geeignet sind.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

## Patentansprüche

1. Verfahren zum Erfassen und Nachverfolgen von Waren, die in den Warenkorb (130) eines digitalen Einkaufswagens (100) oder eines Kommissionierwagens eingelegt werden, enthaltend die Schritte:
a) permanentes Aufnehmen (600, 700) von Bilddaten des Warenkorbs durch eine am Einkaufswagen montierte Kamera (140, 142),
b) Registrieren (620, 720) eines Einlegevorgangs einer Ware in den Warenkorb mittels automatisierter Auswertung von Sensordaten, die von Sensoren am Einkaufswagen bereitgestellt werden,
c) Durchführen eines automatisierten Kontrollvorgangs (630, 730) darauf, ob die eingelegte Ware verlässlich genug erfasst worden,
d) wenn der Kontrollvorgang ergibt, dass eine Ware (210) nicht oder nicht verlässlich genug erfasst worden ist, separates Abspeichern (640, 740) einer Kopie der aufgenommenen Bilddaten aus einem Zeitabschnitt vorgegebener Länge, die den registrierten Einlegevorgang zeigen,
e) Erstellen (650, 750) einer Markierung für die nicht oder nicht verlässlich genug erfasste Ware (210) in einer digitalen Warenliste, die die in den Warenkorb (130) eingelegten Waren repräsentiert.

2. Verfahren nach Anspruch 1, wobei die Bilddaten während eines Zeitfensters vorgegebener Länge roulierend abgespeichert und vorher bestehende Bilddaten überschrieben werden.

3. Verfahren nach Anspruch 1 oder 2, wobei eine automatisierte Konfidenzbewertung, wonach eine Ware als nicht verlässlich genug erfasst gilt, anhand von Konfidenzdaten für die jeweilige Warenerfassung erstellt wird.

4. Verfahren nach Anspruch 1 oder 2, wobei die Sensordaten Messdaten eines Wägesystems (120) sind, das eine durch das Einlegen der Ware verursachte Gewichtszunahme misst.

5. Verfahren nach dem vorstehenden Anspruch, wobei für eine Ware vordefinierte Konfidenzbereiche ausgewertet werden, durch Gewichtsvergleich eines vordefinierten Soll-Gewichts der Ware mit ihrem gemessenen Ist-Gewicht.

6. Verfahren nach dem vorstehenden Anspruch, wobei für eine Ware ihr Ist-Gewicht separat in einer Warendatenbank gespeichert wird, wenn sie verlässlich genug erfasst worden ist.

7. Verfahren nach Anspruch 1 bis 3, wobei die Sensordaten die bei einem Einlegevorgang einer Ware aufgenommenen Bilddaten sind.

8. Verfahren nach dem vorstehenden Anspruch, wobei für eine Ware vordefinierte Konfidenzbereiche ausgewertet werden durch einen Bildvergleich der bei Erfassung der Ware im Ladengeschäft aufgenommenen Ist-Bilddaten mit für die Ware hinterlegten Soll-Bilddaten.

9. Verfahren nach einem der vorstehenden Ansprüche, weiter enthaltend die Schritte:
a) automatisiertes Prüfen (670, 770) der Warenliste auf das Vorhandensein von in der Warenliste markierten Waren (210),
b) bei Antreffen einer markierten Ware (210) Abspielen (672, 752, 872) der separat abgespeicherten Kopie der Bilddaten aus einem Zeitabschnitt vorgegebener Länge, die den Einlegevorgang der Ware in den Warenkorb zeigen.
c) Anbieten (674, 752, 874) einer Benutzerschnittstelle zum separaten Nacherfassen der markierten Ware (210).

10. Verfahren nach einem der vorstehenden Ansprüche, wobei der Einkaufswagen ein Kommissionierwagen ist, und die digitale Warenliste eine Kommissionierungsliste ist.

11. Verfahren zum Erfassen und Nachverfolgen von Waren durch ein Kassenprüfmodul (190), wobei die Waren in den Warenkorb (130) eines digitalen Einkaufswagens (100) eingelegt wurden, enthaltend die Schritte:
a) Empfangen (820, 830) einer ID für den Einkaufswagen (100), sowie eine digitale Warenliste, die die in den Warenkorb eingelegten Waren des Einkaufswagens repräsentiert,
b) automatisiertes Prüfen (870) der Warenliste auf das Vorhandensein von in der Warenliste markierten Waren , wobei die Markierung einer Ware einen nicht oder nicht verlässlich genug erfassten Erfassungsvorgang einer Ware (210) beim Einlegen in den Warenkorb (130) darstellt,
c) bei Antreffen einer markierten Ware (210), Abspielen (872) der separat abgespeicherten Kopie der Bilddaten aus einem Zeitabschnitt vorgegebener Länge, die den Einlegevorgang der Ware (210) in den Warenkorb zeigen,
d) Anbieten (874) einer Benutzerschnittstelle in der Kassenzone zum separaten Nacherfassen der markierten Ware (210).

12. Scanbox (110) zur Befestigung an einem Einkaufswagen (100), enthaltend:
einen lauffähigen Tabletcomputer
mit I/O Schnittstellen zum Aufnehmen (600, 700) von Bilddaten des Warenkorbs durch eine am Einkaufswagen montierte Kamera (140, 142),
mit I/O-Schnittstellen für Sensordaten, die von Sensoren am Einkaufswagen bereitgestellt werden,
mit einem Speicher (118, 119) zum Speichern von Codeabschnitten und eine Logikeinheit (112) zur Ausführung dieser Codeabschnitte zum Ausführen entsprechender Schritte des Verfahrens nach einem der Ansprüche 1 bis 10, wenn es zur Ausführung geladen wird.

13. Digitaler Einkaufswagen (100) mit einer daran befestigten Scanbox (110), nach dem vorstehenden Anspruch.

14. Computerprogramm für die Ausführung in einem Datenverarbeitungssystem, enthaltend Codeabschnitte zum Ausführen entsprechender Schritte des Verfahrens nach einem der Ansprüche 1 bis 11, wenn es zur Ausführung geladen wird.

15. Computerprogrammprodukt, gespeichert auf einem computerlesbaren Medium, enthaltend eine computerlesbare Programmeinrichtung, um einen Computer dazu zu veranlassen, das Verfahren gemäß einem der vorstehenden Ansprüche 1 bis 11 durchzuführen, wenn die Programmeinrichtung von dem Computer ausgeführt wird.
